# EUROPEAN PATENT APPLICATION

(11) **EP 3 434 959 A1**
(43) Date of publication of application: **30.01.2019**
(21) Application number: 17183803.0
(22) Date of filing: 28.07.2017
(51) Int. Cl.: F17C 5/00

(54) **METHOD AND APPARATUS FOR STORING LIQUEFIED GAS IN AND WITHDRAWING EVAPORATED GAS FROM A CONTAINER**

(71) Applicant: Cryostar SAS, 68220 Hesingue (FR)
(72) Inventor: RAGOT, Mathias, 68510 Sierentz (FR); MARCUCCILLI, Frédéric, 68000 Colmar (FR); FABRE, Fabien, 68400 Riedisheim (FR)

(57) **Abstract**

The present invention relates to a method and an apparatus for storing liquefied gas in at least one insulated container (1) while withdrawing evaporated gas from one or more of the at least one container (1), wherein at least a part of the evaporated gas is supplied to a recondenser (11) and wherein liquefied gas is withdrawn from one or more of the at least one container (1) and at least in part supplied to the recondenser (11) for recondensing the evaporated gas supplied to the recondenser (11) such that recondensed gas is obtained at a recondenser outlet, wherein before supplying the liquefied gas to the recondenser (11), the liquefied gas is subcooled by passing it through a refrigeration unit (8, 9), at least a part of the subcooled liquefied gas being supplied to the recondenser (11), and wherein at least a part of the recondensed gas obtained at the outlet of the recondenser (11) is reintroduced into one or more of the at least one container (1).

## Description

The present invention relates to a method and an apparatus for storing liquefied gas in at least one insulated container and for withdrawing evaporated gas from one or more of the at least one container. It is of particular reference and benefit to the storage of liquefied natural gas (LNG) in ocean-going tankers.

The invention is of particular relevance to the storage of LNG in ocean-going tankers and is primarily described herein with reference to that application. It is however to be understood that it is also applicable to storage of other cryogenic liquid mixtures, for example liquid air, or cryogenic liquids in general, for example liquid argon, liquid hydrogen, liquid helium, liquid nitrogen and liquid oxygen, and to other forms of container, including insulated road tankers, insulated rail tankers and insulated static tanks.

Storing and transporting in liquid form such gases as natural gas and atmospheric gases offers considerable benefits in the large quantities that may be stored or transported in a given size of container. The low temperatures of such cryogenic liquids do however impose many severe requirements upon the container's design and operation. The container must be mechanically strong and capable of withstanding the low storage temperatures and the expansion and contraction stresses on heating and cooling between storage and ambient temperatures. It must be substantially if not entirely enclosed and provide a high level of insulation so as to minimise heat inleak and the resultant evaporation of the liquid.

### State of the art

While natural gas is conveniently stored and transported in liquid state, it is generally used, however in the gaseous state, e.g. for propulsion of the tanker. To this end, a flow of LNG under pressure is provided for downstream vaporisation and superheating in order to provide a gas below the critical pressure of natural gas or a fluid at a pressure above the critical pressure to a consumer. Also boiled-off gas, i.e. evaporated LNG can be used to this end.

WO 2010/007535 A1 discloses a corresponding method and apparatus for converting LNG to such a superheated gas or fluid. In this document, a boil-off gas re-condenser is described. Due to heat inleak liquefied natural gas is evaporated and fills the ullage space of the container. To control the container pressure, a part of this boiled-off gas (BOG) is withdrawn from the ullage space. While a part of the BOG can be fed to the engines of the tanker, another part is recondensed in order to minimise venting or combusting excess BOG. For recondensation, the BOG is supplied through a first inlet into a condenser and LNG taken from the liquid space of the container is supplied to a second inlet of the condenser. The flow of LNG into the condenser is predetermined so as to ensure that all the boiled-off natural gas entering the condenser is recondensed therein by contact with the LNG on the surfaces of a packing or another liquid-vapour contact medium located within the condenser. The resulting recondensed LNG passes out of the condenser through an outlet to a distribution line. The distribution line communicates with a plurality of booster pumps for providing the necessary flow of LNG under pressure for downstream vaporisation and superheating.

The BOG recondenser according to WO 2010/007535 A1 is usually implemented as a separate drum where BOG recondensation is achieved owing to a direct contact between excess BOG and low pressure LNG. The obtained condensates are rather warm, typically between - 140 °C and -130 °C, and can therefore no t be returned back to the LNG storage tank.

WO 2005/022027 A1 discloses a method and an apparatus for the controlled storage of liquefied gases such as liquefied natural gas in an enclosed insulated container. The container pressure is controlled by withdrawing a part of the liquid by a pump, typically driven by a variable frequency drive, subcooling the withdrawn part of LNG by an external refrigeration unit and re-injecting the subcooled LNG into the container. Tank/container pressure stabilisation is obtained by controlling the external refrigeration unit cold production such that when the tank pressure increases cold production is also increased. The subcooled liquid is re-injected into the storage tank using spray nozzles arranged in the tank gas dome/ullage space and/or in the liquid space of the container (different elevations of these nozzle ramps are possible).

Such nozzle ramps or sprayers arranged inside the tanks/containers are used to cool down the tanks. Spraying efficiency is not the major point of focus as the sprayed liquid will vaporise at some point and hence create cold, and the desired cool-down effect will be achieved. However, in order to recondense BOG generated in the ullage space of the tank by direct contact of subcooled liquid with BOG, the sprayer design becomes a crucial factor. The higher the exchange surface between the subcooled liquid and the BOG, the more efficient is BOG recondensation. The smaller the sprayed liquid droplets are, the higher the exchange surface. This, however, is often difficult to achieve with existing nozzle ramps/sprayers or would need a cumbersome retrofit.

It is thus an object of the present invention to provide an efficient BOG recondenser which avoids the above disadvantages.

Another problem of BOG recondensation processes is related to the composition of the vapour, on the one hand, and of the recondensed BOG, on the other hand. Generally, BOG has a higher proportion of nitrogen than LNG. The higher the nitrogen content of the BOG, the more difficult is its recondensation by a heat exchanger as the lower the pressure and temperature need to be to which the refrigerant is expanded. Typical refrigerants can be nitrogen or a hydrocarbon mixture. Due to the higher nitrogen content of the BOG, the reliquefied BOG has a higher density than the stored liquefied gas. This increases the likelihood of stratification as the heavy recycled material sinks towards the bottom of the container. Stratification, however, can lead to a sudden rollover and mixing of layers which may result in a boiling action. Finally, the condensation is often not total because the higher nitrogen content of the BOG decrease the BOG bubble point to a temperature lower the one of LNG, resulting in flashing of the BOG at the tank bottom pressure.

It is therefore another object of the present invention to provide an efficient BOG recondensation process which avoids the above disadvantages, especially the disadvantages of stratification and incomplete recondensation.

### Summary of the present invention

According to the present invention there is provided a method for storing liquefied gas in at least one insulated container while withdrawing evaporated gas from one or more of the at least one container and a corresponding apparatus according to the independent claims.

Preferred embodiments are given in the respective dependent claims and the following description.

According to the present invention there is provided a method for storing liquefied gas in at least one insulated container and for withdrawing evaporated gas from one or more of the at least one container, wherein at least a part of the evaporated gas is supplied to a recondenser and wherein liquefied gas is withdrawn from one or more of the at least one container and at least in part supplied to the recondenser for recondensing the evaporated gas supplied to the recondenser such that recondensed gas is obtained at a recondenser outlet, wherein before supplying the liquefied gas to the recondenser, the liquefied gas is subcooled by passing it through a refrigeration unit, at least a part of the subcooled liquefied gas being supplied to the recondenser, and wherein at least a part of the recondensed gas obtained at the outlet of the recondenser is reintroduced into one or more of the at least one container.

The term "withdrawing evaporated gas from a container" is primarily to be understood as withdrawing evaporated gas from the ullage space of the container where the stored liquefied gas changes its state from liquid to vapour. The present invention provides a recondenser preferably in the form of a drum separated from the storage tanks/containers and optimized for recondensation service. As explained later, the present invention not only works with a single container but also with a plurality of containers together with one single external recondenser. According to another aspect of the present invention, it is also possible to integrate the recondenser into a container. According to the present invention, evaporated gas is condensed with subcooled liquefied gas, which is especially advantageous when using LNG as a liquefied gas and BOG as an evaporated gas. By condensing BOG with subcooled LNG, the composition and temperature of the recondensed liquid returned to the container are similar to that of the stored LNG such that the likelihood of stratification with the danger of in-tank flashing is considerably reduced.

Preferably, the evaporated gas withdrawn from a container is boiled-off gas generated in the container due to the unavoidable heat inleak. While a part of the boiled-off gas can be supplied to gas consumers, another part of it or the other part of it can be supplied to the recondenser according to the present invention. This minimizes the amount of excess gas, especially in case of BOG, which is vented or combusted.

As already mentioned above, the present invention is particularly useful when storing liquefied natural gas. However, it is also applicable to the storage of other cryogenic liquid mixtures, like liquid air, or cryogenic liquids, like liquid argon, liquid hydrogen, liquid helium, liquid nitrogen or liquid oxygen and/or mixtures of such cryogenic liquids.

In a preferred embodiment, a part of the subcooled liquefied gas by-passes the recondenser and is reunited with the recondensed gas which is reintroduced into one or more of the at least one container. This allows to directly mix the recondensed liquid with subcooled liquid from the tank. By this embodiment, a broader composition and temperature range of the liquid reintroduced into the container can be achieved.

In principle, it is possible to reintroduce the recondensed gas into the container by feeding it into an ullage space and/or a liquid space of the container. It is preferred, however, to directly feed the recondensed gas or in general the liquid into the liquid space of the container.

It should be noted that according to the method of the present invention, evaporated gas withdrawn from a first container can also be reintroduced in its recondensed form into a second container; in general, the recondensed gas can be returned to any container of the at least one container or to more than one container of in case of two or more containers.

In principle, the condensed gas can be fed into a container from the top and/or from a side and/or from the bottom of the container. As will be explained in connection with embodiments according to the appended figures, it can be advantageous to feed the recondensed gas back into a container from the top of the container and into the liquid space of the container. This can be realized by a goose neck piping arrangement which allows to hydraulically control the liquid level in the recondenser.

It is also possible to integrate the recondenser into one of the at least one container. Recondensed gas obtained from this recondenser is then directly reintroduced into the interior of this container. Further details of this embodiment are given in connection with the third aspect of the present invention, which is directed to a corresponding apparatus.

According to a second aspect, the present invention relates to an apparatus for the storage of liquefied gas, which comprises at least one insulated container containing liquefied gas, a refrigeration unit for subcooling liquefied gas, a recondenser having a first inlet for evaporated gas, a second inlet for liquefied gas, and an outlet for recondensed gas, wherein the apparatus further comprises means for withdrawing evaporated gas from one or more of the at least one container and feeding at least a part of it to the first inlet of the recondenser, means for withdrawing liquefied gas from one or more of the at least one container and supplying at least a part of it to the refrigeration unit for subcooling the liquefied gas, means for supplying at least a part of the subcooled liquefied gas from the refrigeration unit to the second inlet of the recondenser, and means for reintroducing at least a part of the recondensed gas from the outlet of the recondenser back to one or more of the at least one container.

Advantageous embodiments of the apparatus according to the present invention are described above in connection with the method according to the present invention and can be transferred to the apparatus in an analogous form.

The means for withdrawing evaporated gas can typically comprise a line or conduit or header for transporting evaporated gas, and a control valve for controlling the amount of evaporated gas entering the recondenser through its first inlet. Preferably, the means also comprise a compressor and a cooling unit for providing gas with appropriate pressure and temperature to a gas consumer and/or to the recondenser. Excess gas which is not needed by the gas consumer can be branched off and fed to the recondenser.

The means for withdrawing liquefied gas from a container typically include a line or conduit or header for transporting liquefied gas and a pump, preferably a submerged (LNG) pump having a variable frequency drive.

The means for supplying subcooled liquefied gas to the recondenser typically comprise a corresponding line with a control valve before the second inlet of the recondenser. By means of the control valves at the first and second inlets of the recondenser the amount of evaporated gas in relation to the amount of subcooled liquefied gas, which are both entering the recondenser, can be controlled.

The means for reintroducing recondensed gas into a container typically comprise a corresponding line for transporting the recondensed gas or liquid and a control valve at the outlet of the recondenser. This valve allows to control the liquid level in the recondenser.

As mentioned above, the apparatus according to the present invention preferably further comprises means for supplying another part of the evaporated gas to a gas consumer.

In a preferred embodiment, the apparatus further comprises means for by-passing a part of the subcooled liquefied gas by the recondenser and supplying it to the means for reintroducing recondensed gas. The means for by-passing typically include a corresponding line or conduit or header for transporting subcooled liquefied gas and a control valve in this line. The by-pass line preferably branches off from the line to the second inlet of the recondenser before the control valve at the second inlet. The by-pass line is then connected to the outlet line from the recondenser, preferably after the control valve at the outlet of the recondenser.

In another preferred embodiment, the means for reintroducing recondensed gas comprise at least one line for feeding recondensed gas into an ullage space and/or a liquid space of the container. Such means typically include a line for transporting the recondensed gas. The necessary pressure for reintroduction can either be generated hydraulically, particularly by gravitational forces, or by one or more pumps. If there is more than one line, e.g. a line entering the container from the top and another line entering the container from the bottom, the corresponding lines preferably include (control) valves for controlling the pressure and the amount of recondensed gas transported in the respective lines.

The at least one line can enter the container from the top and/or from a side and/or from the bottom of the container, as already explained above.

In a preferred embodiment, the at least one line comprises a piping arrangement for reintroducing recondensed gas into the liquid space of the container and for hydraulically controlling the liquid level in the recondenser. This embodiment has already been discussed above in connection with the method of the present invention.

A third aspect for which independent protection is sought, but which also represents an embodiment of the invention according to the first and second aspects, is directed to a container having the recondenser integrated into the top part of the container. The corresponding apparatus can be described as follows: An apparatus for the storage of liquefied gas which comprises at least one insulated container containing liquefied gas, a refrigeration unit for subcooling liquefied gas, a recondenser having a first inlet for evaporated gas, a second inlet for liquefied gas, and an outlet for recondensed gas, wherein the apparatus further comprises means for withdrawing evaporated gas from one or more of the at least one container and feeding at least a part of it to the first inlet of the recondenser, means for withdrawing liquefied gas from one or more of the at least one container and supplying at least a part of it to the refrigeration unit for subcooling the liquefied gas, means for supplying at least a part of the subcooled liquefied gas from the refrigeration unit to the second inlet of the recondenser, means for reintroducing at least a part of the recondensed gas from the outlet of the recondenser back to one of the at least one container, wherein the recondenser and its outlet for recondensed gas, and the means for reintroducing the recondensed gas into the container are integrated into the top part of the container such that recondensed gas is directly reintroduced into this container.

In this apparatus, the evaporated gas can still be withdrawn from the same or another container and fed to the first inlet of the recondenser while subcooled liquefied gas is supplied to the second inlet of the recondenser. The first and the second inlets in this case connect the recondenser with the corresponding external lines. However, in a further preferred embodiment, the first inlet of the recondenser and the means for withdrawing evaporated gas from this container and feeding it to the first inlet of the recondenser are also integrated into the same container. In this embodiment, evaporated gas from the container is directly supplied to the first inlet of the recondenser without the need of an external line.

In each embodiment of the third aspect of the present invention, the recondensed gas is directly reintroduced into the container without the need of external lines. Further details of this third aspect of the present invention are given in connection with the embodiments according to the appended figures.

Further advantages and preferred embodiments of the invention are disclosed in the following description and figures.

It is understood by a person skilled in the art that the preceding and the following features are not only disclosed in the detailed combinations, but that also other combinations or the features alone can be used without exceeding the scope of the present invention.

The invention will now be further described with reference to the accompanying drawings showing preferred embodiments.

### Brief description of the drawings

- Fig. 1a: schematically shows a first embodiment of an apparatus according to the present invention;
- Fig. 1b: schematically shows another embodiment of an apparatus according to the present invention;
- Fig. 2: schematically shows another embodiment of an apparatus according to the present invention;
- Fig. 2a: schematically shows another embodiment of an apparatus according to the present invention;
- Fig. 2b: schematically shows another embodiment of an apparatus according to the present invention;
- Fig. 3: schematically shows another embodiment of an apparatus according to the present invention;
- Fig. 3a: schematically shows another embodiment of an apparatus according to the present invention;
- Fig. 3b: schematically shows another embodiment of an apparatus according to the present invention;
- Fig. 4: schematically shows an embodiment according to the third aspect of the present invention;
- Fig. 5: schematically shows another embodiment of an apparatus according to the present invention, said apparatus including a plurality of containers; and
- Fig. 6: schematically shows another embodiment of an apparatus according to the present invention in an environment including LNG consumers and suppliers as well as gas consumers.

### Detailed description of the drawings

In the following, the different embodiments according to the Figures are discussed comprehensively, same reference signs indicating same or essentially same units. It is appreciated that a person skilled in the art may combine certain components (like a compressor, a valve, a cooler, a pump, certain lines etc.) of an embodiment shown in a Figure with the features of the present invention as defined in the appended claims without the need to include more than this certain component or even all other components of this embodiment shown in said Figure. The embodiments shown all relate to the application of storing LNG, but it is appreciated that a person skilled in the art can easily transfer the embodiments to applications involving other cryogenic gases or gas mixtures.

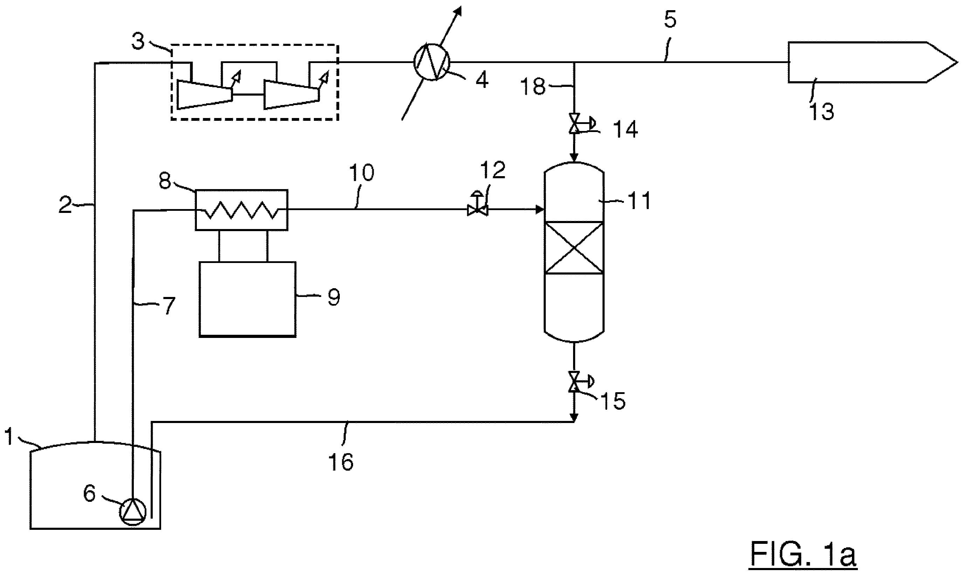

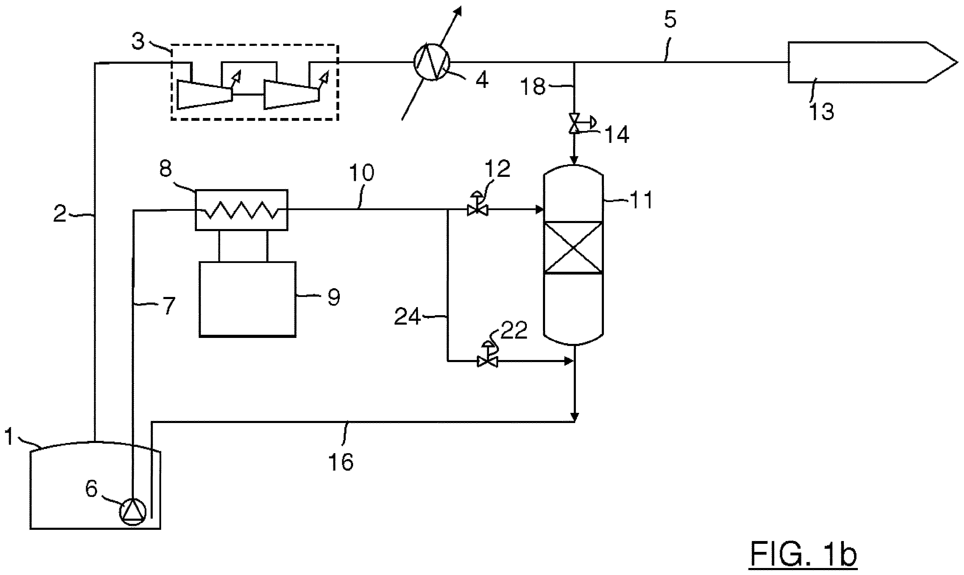

Fig. 1 a schematically shows an embodiment of an apparatus according to the present invention. The apparatus comprises one insulated container 1 in the form of a low pressure storage tank containing liquefied gas, a refrigeration unit 8, 9 for subcooling liquefied gas, and a recondenser 11. The apparatus further comprises means 2, 3, 4, 18 for withdrawing evaporated gas from the container 1 and feeding at least a part of it to a first inlet of the recondenser 11 through line 18 and control valve 14. The means for withdrawing evaporated gas from the container 1 comprise a line 2, a multi-stage compressor 3 and a cooling unit 4. Subcooled liquefied gas from the refrigeration unit 8, 9 is supplied through line 10 having a control valve 12 to a second inlet of the recondenser 11. The apparatus further comprises means 15, 16 for reintroducing at least a part of the recondensed gas from an outlet of the recondenser 11 back to the container 1. These means include a line 16 including a control valve 15.

The embodiment of Fig. 1 a is a typical arrangement on an LNG carrier. Boiled-off gas (BOG) is formed in the ullage space of the storage tank 1 and is sent to a BOG multi-stage compressor 3 via line 2. A typical BOG pressure range is 1.03 - 1.2 bara for a typical temperature range of - 140 °C to 0 °C. The pressuri zed BOG is cooled down by the gas cooler or cooling unit 4 to about 40 °C and is then sent to one or more gas consumers 13 through line 5. Typical gas consumers are engines or power generators connected to the fuel gas header or line 5. When the BOG generated in the LNG tank 1 (also called Natural BOG) exceeds consumers' needs, tank pressure is increasing. As LNG carriers are typically equipped with atmospheric pressure tanks, the natural BOG (NBOG) should be withdrawn and/or condensed to avoid overpressurisation

In the embodiment shown in Fig. 1a, LNG is withdrawn from the liquid space of the storage tank 1 by a in-tank pump 6 and supplied to the external refrigeration unit 8, 9, which comprises a heat exchanger 8 or subcooler connected to a refrigerant cycle 9. In the subcooler (typically a PFHE) LNG from the tank 1 (typical temperature level of - 160 °C) is cooled down against the refrigerant cycle 9. Although many different refrigeration cycles may be employed, the preferred choice is a Brayton cycle, as for example discussed in WO 2005/022027 A1 (see above). For LNG cooling, the preferred refrigerant is nitrogen. For further details concerning design and function of such a refrigeration unit, reference is explicitly made to said document. LNG leaves the subcooler 8 at a temperature ranging from - 170 °C to - 190 °C. The subcooled LNG is led to the recondenser drum 11 via the liquid line or header 10 equipped with the control valve 12. On the BOG side, excess BOG is taken from the fuel gas header 5 and carried to the BOG recondenser 11 via line 18 equipped with the control valve 14. In the BOG recondenser 11, subcooled LNG is directly in contact with the warm BOG such that condensation takes place. Typical recondenser operating pressures are ranging from 2 to 8 bara. The quantity of subcooled LNG fed to the recondenser 11 is adjusted to achieve BOG recondensation and also the correct condensate temperature at the outlet of the recondenser 11 at the recondenser liquid bottom. A typical temperature level reached by the liquid leaving the recondenser 11 is at about - 160 °C. The liquid level in the BOG recondenser 11 is controlled by control valve 15. The condensates are then reintroduced into the storage tank or container 1 via header or line 16.

Fig. 1b shows the embodiment of Fig. 1 a with additional means 22, 24 for by-passing a part of the subcooled liquefied gas by the recondenser 11 and supplying this part into line 16 in order to return recondensed gas together with subcooled liquefied gas back to the container 1. Line 24 is equipped with a control valve 22 for adjusting the amount of subcooled liquefied gas which is branched off of line 10. This embodiment particularly allows to reach lower temperature levels of the liquid which is returned to the container 1.

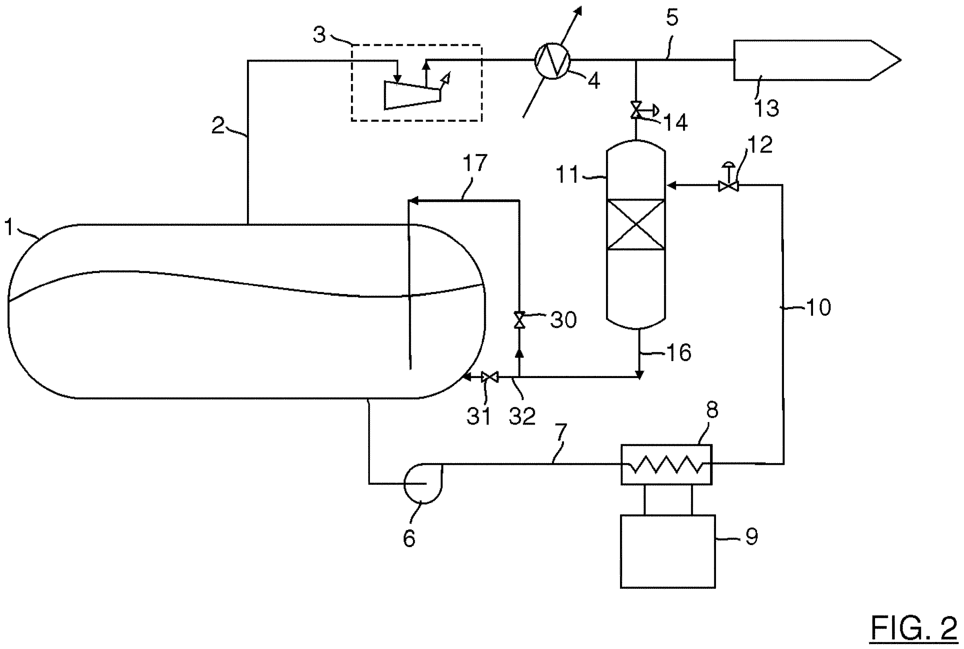

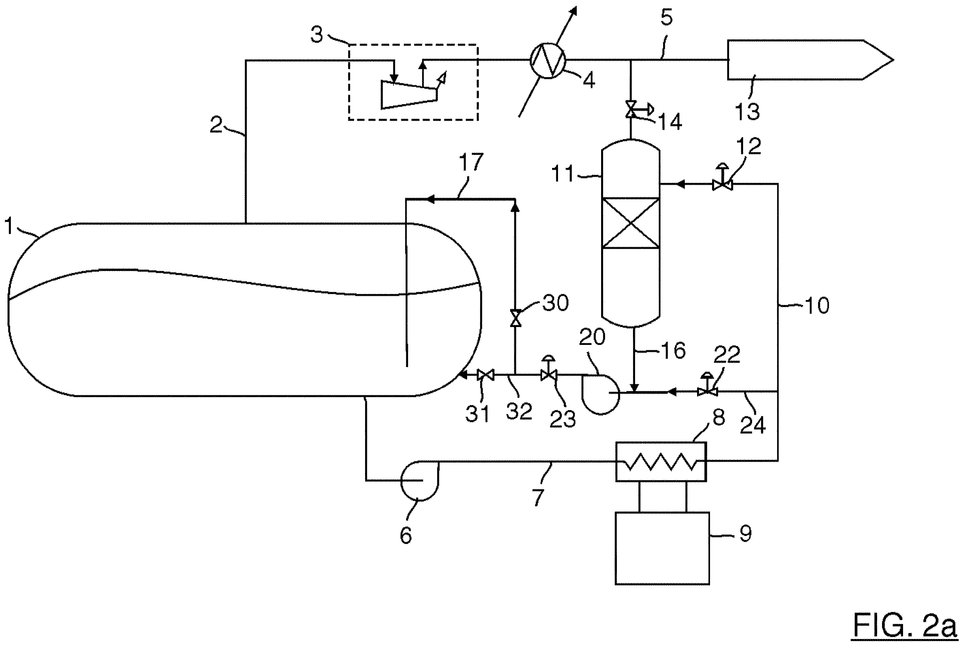

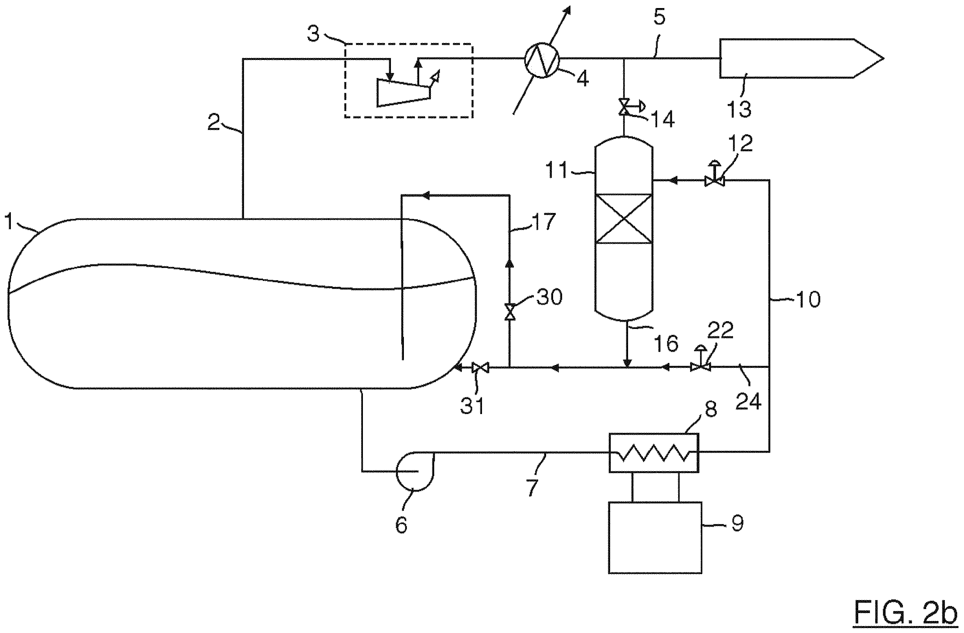

Fig. 2 shows a similar embodiment as Fig. 1b, employing a bullet tank as a container 1. Depending on their size, bullet tanks can be pressurized to pressures ranging from 5 to 36 bara. The arrangement shown in Fig. 2 is a typical configuration with external LNG pumps and can often be found in on-shore terminals where tanks can be either atmospheric or pressurized. The external pump 6 withdraws liquefied gas from the tank or container 1 and supplies it via line 7 to the refrigeration unit 8, 9.

Fig. 2 shows an embodiment which allows to hydraulically control the recondenser liquid level by the shown goose neck piping arrangement 17. With a closed valve 31, no liquid is returned through line 32 to the bottom part of the container 1. In this case, with an open valve 30 the liquid level in the recondenser 11 can be controlled by the difference of the liquid levels in the recondenser 11 and in the tank 1.

Line 32 allows to feed at least a part of the recondensed liquid from line 16 into the bottom part of the container 1. All other components in the embodiment of Fig. 2 are similar or equivalent to corresponding components already discussed in connection with Fig. 1 a and 1 b.

Fig. 2a shows an embodiment similar to the one of Fig. 2, employing a by-pass line 24 equipped with a control valve 22 for directly introducing subcooled liquefied gas into the flow of recondensed gas from line 16. A condensate return pump 20 is installed in order to return the resulting liquid back to the container 1 when the recondenser 11 is installed at ground level. Control valve 23 only opens when the required pressure is reached. All other components correspond to the embodiment shown in Fig. 2 and are not discussed again in order to avoid repetitions.

As shown in Fig. 2b, pump 20 in the embodiment of Fig. 2a is not required if the flow of recondensed gas can be gravity driven between recondenser 11 and storage tank 1.

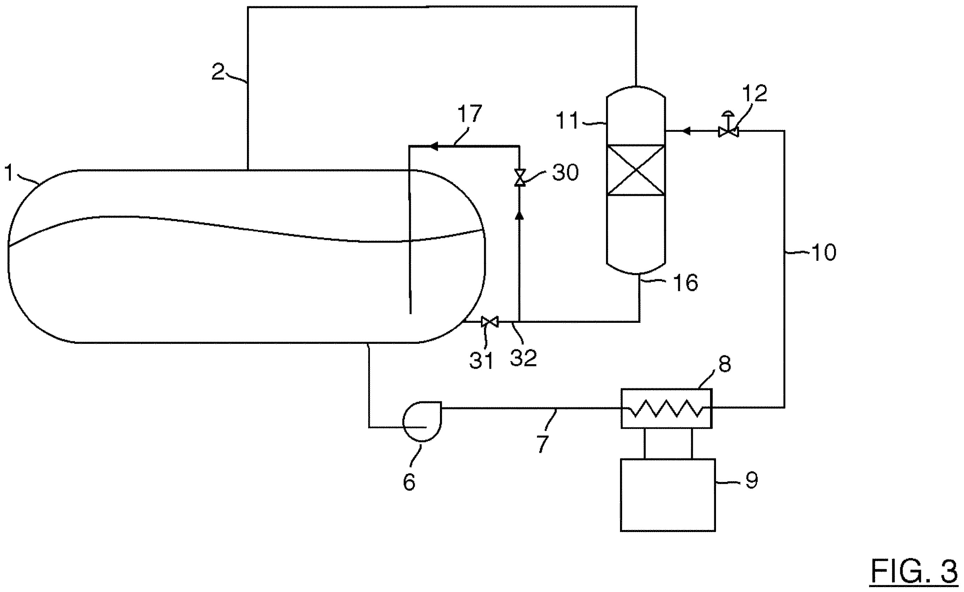

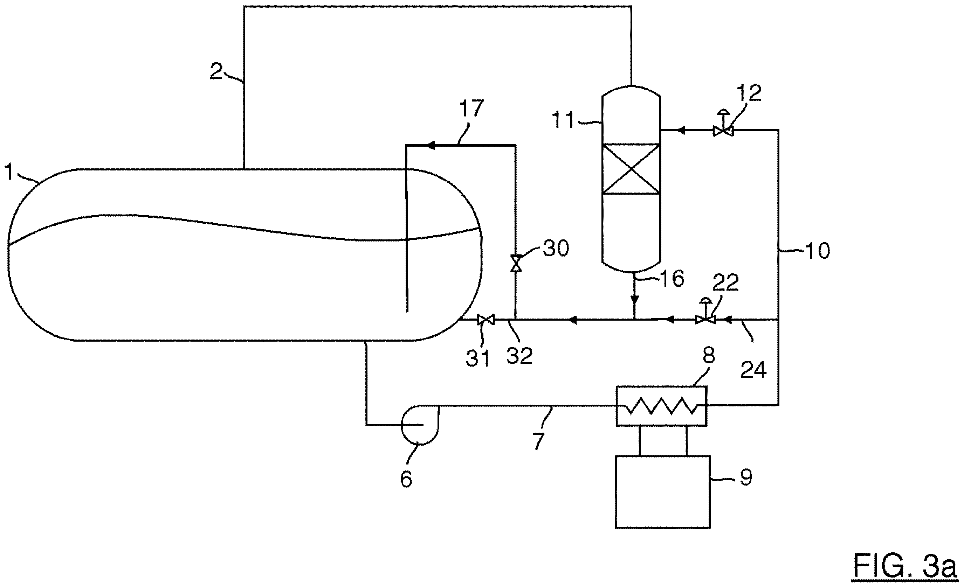

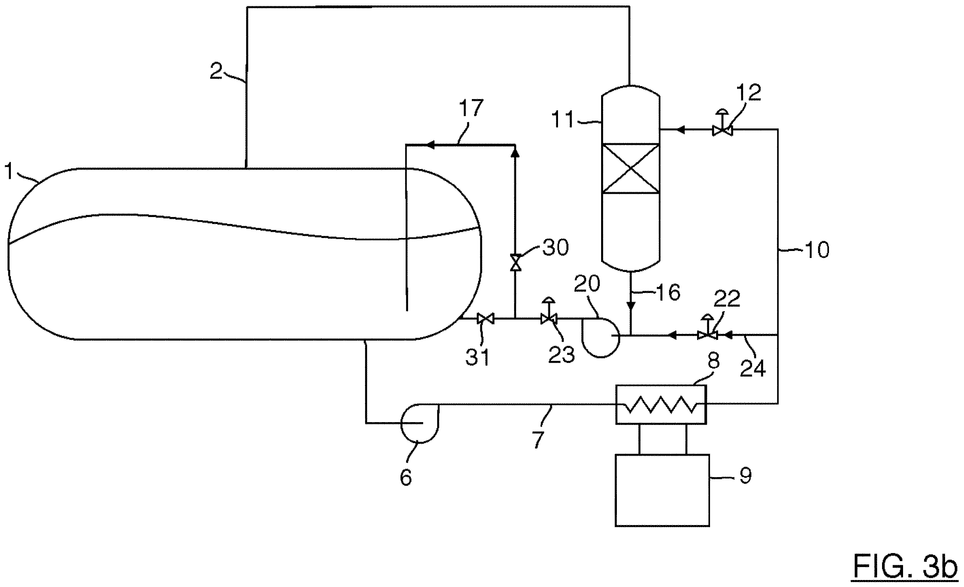

Fig. 3, 3a and 3b show three other alternatives of embodiments where no BOG compressor 3 is required. The means for withdrawing BOG from the container 1 and feeding the withdrawn BOG to the first inlet of the recondenser 11 nearly comprise the gas header 2. Such a configuration can preferably be applied in cases of pressurized LNG tanks 1. The BOG recondenser 11 is directly connected to the ullage space of tank 1 via gas header 2. The configuration on the liquid side is similar to the embodiment shown in Fig. 2. As the direct contact between subcooled LNG and the cold BOG create the recondensation of BOG in the recondenser 11, a natural pressure decrease takes place in the recondenser 11 with the result that a flow of BOG is created from the tank 1 to the recondenser 11 through line 2.

Similar to the embodiments already described above, the recondensed liquid is returned into the storage tank 1 either driven by gravity, as shown in Fig. 3 and 3a (Fig. 3a shows the option of mixing subcooled LNG into the flow of recondensed gas) or via a dedicated pump 20 as shown in Fig. 3b (and as previously discussed in connection with Fig. 2a). The liquid level in the recondenser 11 can be naturally established based on the storage tank level by connecting the liquid outlet line 16, 17 directly to the tank bottom by means of manual valve 22. Valve 22 is used to regulate the flow of subcooled LNG bypassing the recondenser through line 24. Valve 23 is used to regulate the pressure at outlet of pump 20 to compensate the static head in the goose neck 17.

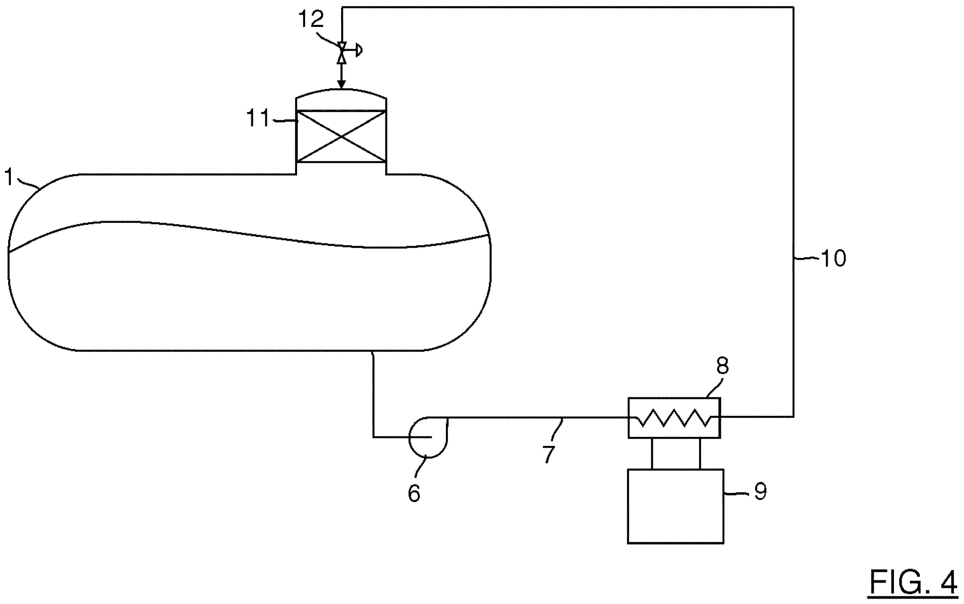

Fig. 4 schematically shows an embodiment according to the third aspect of the present invention. Again, the container 1 is a bullet tank having an external pump 6 for withdrawing LNG from the tank 1. The LNG withdrawn from the tank 1 is supplied to a refrigeration unit 8, 9 for subcooling LNG. The subcooled LNG is supplied through line 10 to the second inlet of recondenser 11. The arrangement of pump 6, refrigeration unit 8, 9 and recondenser 11 has already been explained in detail in connection with the previous embodiments. The embodiment of Fig. 4 shows a recondenser 11 which is integrated into a top part of the container 1. In detail, the recondenser 11 and its outlet for recondensed gas and the means for reintroducing the recondensed gas into the container 1 are integrated into a top part of the container 1, which top part is designed to this purpose as schematically shown in Fig. 4. Recondensed gas is directly reintroduced into the container 1 such that external lines 16, 17 and/or 32 with the corresponding valves are no longer required.

In principle, in the embodiment of Fig. 4 it is still possible to withdraw BOG through an external line 2 (see Fig. 3b) and to supply it to the first inlet of recondenser 11, however, as shown in Fig. 4 also the first inlet of the recondenser 11 and any means for withdrawing evaporated gas from the container 1 and feeding it to the first inlet of the recondenser 11 are integrated into the same container 1. By this arrangement, BOG generated in the ullage space of container 1 can directly be supplied to the first inlet of the recondenser 11 which is integrated into this container 1.

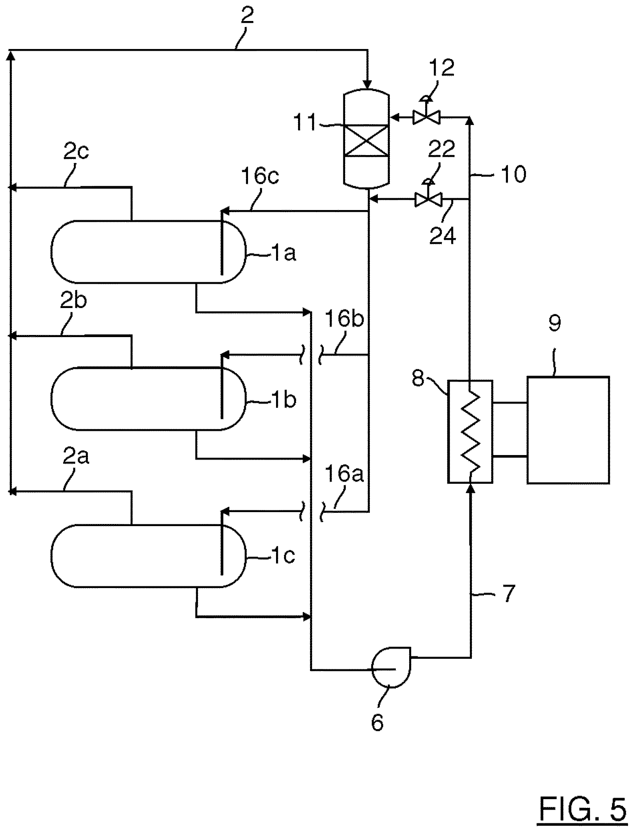

Fig. 5 shows an arrangement according to another embodiment of the present invention including more than one container. As an example, three containers 1 a, 1 b, 1 c are shown. One recondenser 11 is connected to the containers 1a - 1 c so that natural BOG from each container can be handled by one single recondenser 11. BOG can be withdrawn from containers 1 a - 1 c through lines 2a - 2c as shown in Fig. 5. The BOG is collected in line 2 and supplied to the first inlet of the recondenser 11. On the other hand, LNG is withdrawn by an external pump 6 from the liquid spaces of the containers 1 a - 1 c. Again, the LNG is subcooled by the refrigeration unit 8, 9 and subcooled LNG is supplied to the second inlet equipped with control valve 12 of the recondenser 11. For further details reference is made to the embodiment of Fig. 3a. The condensed gas, optionally mixed with subcooled LNG through line 24 equipped with control valve 22 is then returned through lines 16a, 16b, 16c to one or more of the containers 1 a, 1 b, 1 c.

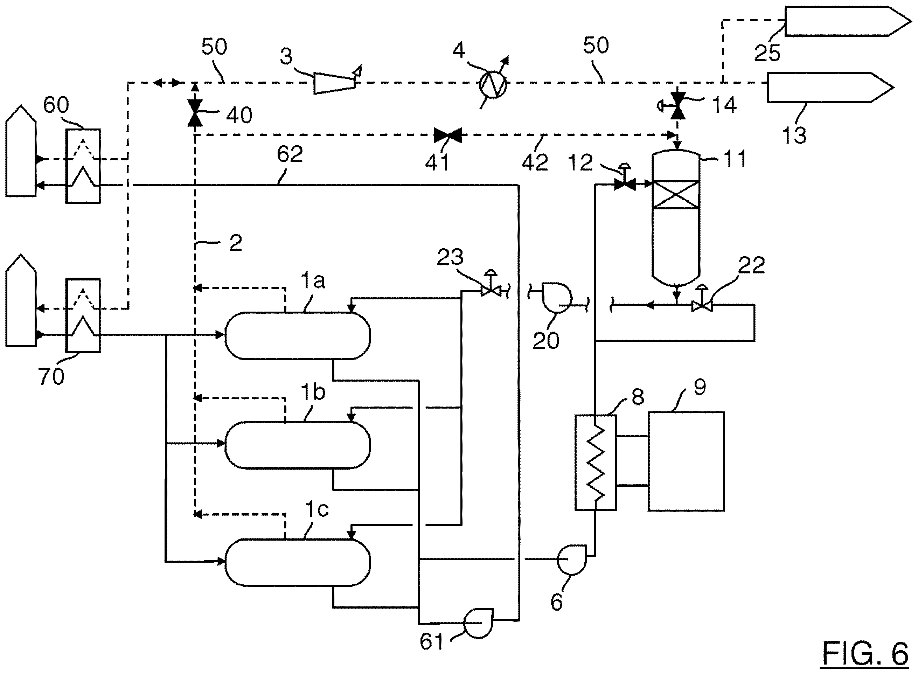

Fig. 6 schematically shows the arrangement of Fig. 5 in a typical environment with LNG suppliers and consumers. The arrangement of Fig. 5 is further equipped with pump 20 for reintroducing liquid into the containers 1a -1c as already discussed in connection with Fig. 3b and 2a, and further shows a line 50 with compressor 3 and cooling unit 4 for supplying BOG to fuel gas consumers 13. Excess BOG is supplied to a vent or flare 25. As can be seen from Fig. 6, by-pass line 42 by-passes consumer line 50 and is equipped with a valve 41. In case no BOG is consumed by consumer 13, cold BOG in lines 2 and 42 is supplied to the first inlet of recondenser 11. The flexible BOG recondenser can treat cold BOG (in line 42) as well as warm BOG (in line 50) from the BOG compressor 3. When BOG consumers are not in operation and no bunkering operation is undertaken, natural BOG from the containers 1a -1c is treated by recondenser 11 without operating BOG compressor 3 or any storage tank overpressurisation.

Fig. 6 shows a simplified sketch of a typical on-shore bunkering terminal where pressurized tanks 1 a - 1 c are implemented. The tanks are filled with LNG coming from LNG carrier at unloading jetty 70 through unloading vessel in-tank pumps (not shown). Due to a piston effect in unloading vessel tanks, BOG coming from the main low pressure BOG header or line 50 will be introduced in the unloading vessel.

Vessels under bunkering operations at jetty 60 are filled with LNG from on-shore terminal pumps 61 and displaced BOG is sent to the main low pressure BOG header 50.

BOG from on-shore storage tanks 1a - 1 c can either be sent directly to the recondenser 11 via line 2 by opening valve 41 and closing valves 40 and 14. Alternatively it can be sent to the main BOG header 50 at the section and of BOG compressor 3 by closing valve 41 and opening valve 40. Pressurized BOG is cooled down in the cooling unit or aftercooler 4 and sent to the fuel gas consumers 13 or to the BOG recondenser 11 via a fuel gas header overpressure valve 14. It is a considerable advantage of the embodiment shown in Fig. 6 that the BOG recondenser design is flexible and can treat cold BOG from LNG storage tanks 1 a - 1 c as well as warm BOG gas coming from a BOG compressor 3.

### List of reference signs

- 1, 1a - 1c: container
- 2, 2a - 2c: line for withdrawing evaporated gas
- 3: compressor
- 4: cooling unit, cooler
- 5, 50: line for supplying gas to consumer
- 6: pump for withdrawing liquefied gas
- 7: line for transporting liquefied gas
- 8: subcooler, heat exchanger
- 9: refrigerant cycle unit
- 10: line to recondenser
- 11: recondenser
- 12: control valve
- 13: consumer
- 14: control valve
- 15: control valve
- 16, 16a - 16c: line for reintroducing liquid into container
- 17: piping arrangement
- 18: line for feeding evaporated gas to recondenser
- 20: pump
- 22: valve
- 23: valve
- 24: by-pass line
- 25: vent, flare
- 30: valve
- 31: valve
- 32: line for reintroducing liquid to bottom of container
- 40: valve
- 41: valve
- 42: by-pass line
- 50: consumer line
- 60: jetty
- 61: pump
- 62: supply line
- 70: jetty

## Claims

1. A method for storing liquefied gas in at least one insulated container (1, 1 a - 1 c) while withdrawing evaporated gas from one or more of the at least one container,
wherein at least a part of the evaporated gas is supplied to a recondenser (11) and wherein liquefied gas is withdrawn from one or more of the at least one container and at least in part supplied to the recondenser for recondensing the evaporated gas supplied to the recondenser such that recondensed gas is obtained at a recondenser outlet,
wherein before supplying the liquefied gas to the recondenser, the liquefied gas is subcooled by passing it through a refrigeration unit (8, 9), at least a part of the subcooled liquefied gas being supplied to the recondenser,
and wherein at least a part of the recondensed gas obtained at the outlet of the recondenser is reintroduced into one or more of the at least one container.

2. The method of claim 1, wherein the evaporated gas withdrawn from the container is boiled-off gas generated in the container.

3. The method of claim 1 or 2, wherein the liquefied gas is liquefied natural gas.

4. The method of any one of the claims 1 to 3, wherein another part of the evaporated gas is supplied to a consumer.

5. The method of any one of claims 1 to 4, wherein a part of the subcooled liquefied gas by-passes the recondenser and is reunited with the condensed gas which is reintroduced into one or more of the at least one container.

6. The method of any one of claims 1 to 5, wherein the recondensed gas reintroduced into the respective container is fed into an ullage space and/or a liquid space of the container.

7. The method according to claim 6, wherein the condensed gas is fed into the container from the top and/or from a side and/or from the bottom of the container.

8. The method of claims 6 and 7, wherein the condensed gas reintroduced into the container is fed into the liquid space of the container by a piping arrangement (17) allowing to hydraulically control the liquid level in the recondenser.

9. The method of any one of claims 1 to 8, wherein the recondenser (11) is integrated into a top part of one of the at least one container such that recondensed gas obtained from this recondenser is directly reintroduced into this container.

10. An apparatus for the storage of liquefied gas which comprises at least one insulated container (1, 1a -1c) containing liquefied gas,
a refrigeration unit (8, 9) for subcooling liquefied gas,
a recondenser (11) having a first inlet for evaporated gas, a second inlet for liquefied gas, and an outlet for recondensed gas,
wherein the apparatus further comprises
means (2, 2a - 2c, 3, 4, 18, 14) for withdrawing evaporated gas from one or more of the at least one container and feeding at least a part of it to the first inlet of the recondenser,
means (6, 7) for withdrawing liquefied gas from one or more of the at least one container (1, 1a - 1 c) and supplying at least a part of it to the refrigeration unit (8, 9) for subcooling the liquefied gas,
means (10, 12) for supplying at least a part of the subcooled liquefied gas from the refrigeration unit (8, 9) to the second inlet of the recondenser (11),
means (15, 16, 16a 16c) for reintroducing at least a part of the recondensed gas from the outlet of the recondenser (11) back to one or more of the at least one container (1,1a-1c).

11. The apparatus of claim 10, further comprising means (3, 4, 5) for supplying another part of the evaporated gas to a consumer (13).

12. The apparatus of claim 10 or 11, further comprising means (22, 24) for by-passing a part of the subcooled liquefied gas by the recondenser (11) and supplying it to the means (15, 16, 16a- 16c) for reintroducing recondensed gas.

13. The apparatus of any one of claims 10 to 12, wherein the means (16, 17, 30, 31, 32) for reintroducing recondensed gas comprises at least one line (17, 32) for feeding recondensed gas into an ullage space and/or a liquid space of the container (1).

14. The apparatus of claim 13, wherein the at least one line (17, 32) enters the container from the top and/or from a side and/or from the bottom of the container (1).

15. The apparatus of claims 13 and 14, wherein the at least one line (16, 17) comprises a piping arrangement (17) for reintroducing recondensed gas into the liquid space of the container and for hydraulically controlling the liquid level in the recondenser (11).

16. The apparatus of any one of claims 10 to 15, wherein the recondenser (11) and its outlet for recondensed gas, and the means for reintroducing the recondensed gas into the container (1) are integrated into a top part of the container (1) such that recondensed gas is directly reintroduced into this container (1).

17. The apparatus of claim 16, wherein further the first inlet of the recondenser (11) and the means for withdrawing evaporated gas from the container (1) and feeding it to the first inlet of the recondenser (11) are integrated into the same container (1) such that evaporated gas from this container (1) is directly supplied to the first inlet of the recondenser (11).

18. An apparatus for the storage of liquefied gas which comprises
at least one insulated container (1) containing liquefied gas,
a refrigeration unit (8, 9) for subcooling liquefied gas,
a recondenser (11) having a first inlet for evaporated gas, a second inlet for liquefied gas, and an outlet for recondensed gas,
wherein the apparatus further comprises
means for withdrawing evaporated gas from one or more of the at least one container (1) and feeding at least a part of it to the first inlet of the recondenser (11),
means (6, 7) for withdrawing liquefied gas from one or more of the at least one container (1) and supplying at least a part of it to the refrigeration unit (8, 9) for subcooling the liquefied gas,
means (10, 12) for supplying at least a part of the subcooled liquefied gas from the refrigeration unit (8, 9) to the second inlet of the recondenser (11),
means for reintroducing at least a part of the recondensed gas from the outlet of the recondenser (11) back to one of the at least one container (1),
wherein the recondenser (11) and its outlet for recondensed gas, and the means for reintroducing the recondensed gas into the container (1) are integrated into a top part of the container (1) such that recondensed gas is directly reintroduced into this container (1).

19. The apparatus of claim 18, wherein further the first inlet of the recondenser (11) and the means for withdrawing evaporated gas from the container (1) and feeding it to the first inlet of the recondenser (11) are integrated into the same container (1) such that evaporated gas from this container (1) is directly supplied to the first inlet of the recondenser (11).
